(19) Europäisches Patentamt / European Patent Office / Office européen des brevets

(11) **EP 3 686 476 A1**

(12) **EUROPEAN PATENT APPLICATION**
published in accordance with Art. 153(4) EPC

(43) Date of publication:
29.07.2020 Bulletin 2020/31

(51) Int Cl.:
*F17D 1/065* $^{(2006.01)}$ *H02K 7/02* $^{(2006.01)}$

(21) Application number: 17912773.3

(22) Date of filing: 21.11.2017

(86) International application number:
PCT/RU2017/000865

(87) International publication number:
WO 2018/226115 (13.12.2018 Gazette 2018/50)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 05.06.2017 RU 2017119594

(71) Applicant: **Yarimov, Marat Otellovich**
**Burzyanski Raion - Respublika Bashkortostan**
**453580 (RU)**

(72) Inventor: **Yarimov, Marat Otellovich**
**Burzyanski Raion - Respublika Bashkortostan**
**453580 (RU)**

(74) Representative: **Benatov, Samuil Gabriel**
**Dr. EMIL BENATOV & PARTNERS**
**6, Asen Peykov Str.**
**1113 Sofia (BG)**

(54) **METHOD FOR TRANSPORTING GAS**

(57) The invention relates to gas industry, industrial gas transport by means of gas-compressor units through local or main gas pipelines. The technical result is increase in efficiency of transporting by means of cost reduction of electric energy. The method includes transporting gas through pipelines by a gas compressing unit with the drive of the electric motor. The method provides transformation of electric energy into mechanical one by interaction between conductors or windings under electric current with magnetic fields after the voltage supply by the rotating rotor connected mechanically with the blower with specified mass of rotating masses and moments of their inertia. Along with the voltage supply to the windings in the start-up period mechanical energy of the rotating masses is accumulated. The energy, in its turn, is obtained when a part of electric energy is transformed when accelerating all rotating masses by the rotor. The energy is conserved and applied in the steady state mode in the form of kinetic energy. As a result, there is a sum of two components of the total mechanical work or energy: the first one is the value of electric current work on rotating the rotor with the blower in the steady state mode, the second one is the work of accumulated mechanical energy transformed from electric energy when accelerating the rotation of the unified system of masses by the rotor; the components are applied together.

EP 3 686 476 A1

**Description**

The invention relates to gas industry, industrial gas transport by means of gas-compressor units through local or main gas pipelines, in particular, as well as gas production and storing in gas storage facilities.

There are ways of gas transport including gas intake from a low-pressure pipeline with the gas injection into a high-pressure pipeline through a gas-compressor unit (GCU) with electric motor drives where the rotor of the gas-compressor unit is rotated mechanically or kinetically via the reduction gear or increasing gear (1) "A.N. Kazachenko, "Exploitation of gas-compressor stations of main gas pipelines", Moscow, "Oil and Gas", 1999, 463p. ISBN №5-7246-0055-2". There also are ways of gas transport by means of pumping over by a gas-compressor unit with electric motor drives "Edited by A.N. Kazachenko; V.N. Nikitin, B.P. Korshakov, «Energy engineering of pipeline gas transport", Moscow, Published by Gubkin Russian State Oil and Gas University,2001" (2).

The methods described only provide partial gas transport of the actual physical processes.

The drawback of the well-known methods of gas transport is poor efficiency and the fact of its major nonconformity of the electric motor drives to the actual processes taking place when operating the electric motors (3). That was stated almost two centuries ago in (4) "F.A. Brockhaus - I.A. Efron, "Encyclopedic dictionary", 1890, reprint on the occasion of the 100th anniversary of the 1st publishing of 1890-1990, "Terra" - TERRA, volume 80, 1994, p.469, "Electric motors"". Due to poor efficiency of the well-known electric motors, the values of the major methods of gas transport are low as well (1), (2).

From the prior art no methods of gas transport able to reach such high values of efficiency through operating of gas-compressor units are known. The existing methods do not respect the law of conservation of mechanical energy (5) through operating of well-known and wide-spread electric motors (3), (4), do not conform to the internationally established units of such physical values as work and energy (6), do not agree with the major laws of Newton's mechanics (7). As is known, any technical and technological processes which do not agree with the laws of physics are not valid and cannot be industrially applied.

The objective of the invention proposed is to improve efficiency of the existing methods of gas transport, to significantly economize the energy reserves, to increase the ecological compatibility of the method, to reach an agreement with the present physical laws and internationally established units of such physical values as work and energy.

The aim of the invention is to create a conceptually new, highly efficient method of gas transport by means of conversion of electric energy via an electric motor to a gas blower of the gas pumping equipment. It also aims at the application of the basic law of nature, the law of conservation of energy, the agreement with the major laws of mechanics and the internationally established unit of such physical value as work, bringing the existing methods of gas transport into compliance with the actual physical processes.

The technical and technological result is achieved by the fact that to provide a new method of gas transport with application of voltage to the electric motor winding at the moment of a start-up the mechanical energy is accumulated. The energy, in its turn, is obtained by transformation of a part of electric energy with acceleration of all rotating masses by a rotor, then the energy is conserved and applied in the steady state mode in the form of kinetic energy. As a result, there is a sum of two components of the total mechanical work or energy: Ae. is the value of electric current work on rotating the rotor with the blower in the steady state mode, $|A_\Sigma d.|$ is the value of work of accumulated mechanical energy transformed from electric energy when accelerating the rotation of the unified system of masses by the rotor. The value is applied together with Ae., while the total work is performed and defined by expression:

$$A_{tot.} = A_{e.} + |A_\Sigma d.|; \qquad\qquad [1].$$

where Atot. is the total work of the motor with the blower on transformation of electric energy into mechanical energy when gas transporting.

For convenience, taking into account the traditional approach, we transpose formula [1] expressing it through power and dividing both parts by time t. We get power expression:

$$P_{tot.} = P_{e.} + |P_\Sigma d.|; \qquad\qquad [2].$$

where Ptot. is the total power developed by the electromechanical motor with the blower when gas transporting;
Pe is the component value of power of the electromechanical drive motor with the blower in the nominal or steady state mode;
$|P_\Sigma d.|$ is the component value of power from the accumulated energy of the rotating masses of the system motor-blower;

It is possible to start and then to operate the drive of the blower, when the stator with specified mass and moment of inertia is rotated with the rotor being static. According to (3), state standards are based on efficiency factor of electric drive motors known since early 19th century (4), which do not agree with the existing physical laws in the field of mechanics. The method of gas transport proposed provides a total balance of all types of energy involved: electric, electromechanical, and purely dynamic or mechanical, and for descriptive reasons the author's diagram in Pic. is taken. All reasoning is based on the fact that masses and moments of inertia of the rotating parts and motor units, of the reduction gear and blower are considered as a sum in a unified system of accumulated mechanical energy $|A_{\sum}d.|$ in the form of their kinetic energy in the unified system motor-blower.

In the well-known methods of gas transport the drive of the blowers of the equipment is performed by the classical electric motors (3), (4) with the energy diagram, which does not represent the mechanical processes taking place in the existing operating techniques of electric motors and then in the methods of gas transport. For example, Pic. with the energy diagram demonstrates the operating mode of the blower with the electric motor drive where, if the power supply is off, the operating motor Ae. = 0, then its system goes on to rotate for a long time td. until it stops due to various losses and the load of the gas blower. This proves and confirms categorically that along with work Ae., the work of electric current on rotating the blower by the rotor in the steady state mode, there also is work $|A_{\sum}d.|$, the work of the accumulated mechanical energy transformed from electric energy when accelerating the rotation of the unified system of masses by the rotor, which is applied together with the first type of work in the form of kinetic energy.

When starting up the gas-compressor unit in Pic. at the initial moment of time tstart. $|A_{\sum}d.| = 0$, the work of the rotational motion of masses is zero, while Ae. = max, the work of the electric current on accelerating the rotating masses by the rotor is much greater than when operating in the steady state mode, sometimes two and even more times greater. Then, according the author's energy diagram, there occurs transition and transformation of the exceeding part of the electric energy set up after the acceleration into mechanical or dynamic energy which is accumulated in the form of kinetic energy of rotating masses within the period of time tstart. when the period of time is over, the electric motor with the blower operates in the steady state mode within the period of time top. The fact proves that the author's suggestion agrees with the law of conservation of energy (5), and transformation of the exceeding part of work Ae. as a start-up part of the work takes place at the moment of acceleration of rotation of masses by the rotor to further be used in the steady state mode, $|A_{\sum}d.|$ as work from kinetic energy of the motion of masses with the moments of inertia $\sum J$. The equivalent transition of electric energy into mechanic one occurs in equal quantitative terms in the form of equality of areas of conditional triangles Sabc $\approx$ Sa'b'c' in the starting period of time. So, Pic. according to the author's energy diagram of the method of gas transport demonstrates that in the period of time top. in the steady state mode two components perform simultaneously. They are work Ae. - the work of electric current on rotating the rotor with the blower in the steady state mode, and $|A_{\sum}d.|$ - the work of preliminary accumulated at the start-up moment kinetic energy of the rotational motion of masses of the rotor with the blower (through the reduction gear or without it), which add up to the total work of the electric motor with the blower through the gas-compressing unit with the electric drive motor in the method suggested. According to (1), (2) for the well-known and existing methods of gas transport work $|A_{\sum}d.|$ - the work of rotational motion of specified masses and their moments of inertia $_{\sum}J$ with a separate addend is not provided as such. That is, the operation principle of well-known electric motors like STD-8000 used in gas transport is based on and described without the addend of work of the rotor motion in the form of kinetic energy, which can be explained and described neither according to the author's diagram, nor to the well-known diagram from (4). For example, the energy diagram cannot explain where the exceeding electric energy goes at the moment of the start-up and acceleration of the system. Or, where is the part of the energy it was transformed into? Since, according to the law of conservation of energy, no energy vanishes and it is supposed to constantly be there in some other form like in the given method of gas transport. Work [1] or power [2] are constantly present and do not disappear as they do in the well-known methods.

To validate author's assumptions, we address to unit of measurement of work from the fundamental point of view considering it as kilogram per meter (kg·m) or newton per meter (n·m). Source (6) from the series "Do you now physics" p.116, 117 gives the essence of the concept of work which, according to the definition, contains a part of the motion path of mass by inertia in the form of the damped kinetic energy of motion, otherwise there is no agreement with the law of conservation of energy. For rotational motion in mechanics the unit of work measurement has the same dimension (kg·m) or (n·m) as in (6) and, basically, is supposed to contain a part of motion within a unified inertial system, e.g., in the method of gas transport suggested.

For the existing methods of gas transport with the electric motor, as explained in (6), it can be concluded the unit of measurement (kg ∎ m) or (n ∎ m) can only be applied partially. If considered ideally on the basis of Newton's laws (7) for a rotating body, in the well-known methods of gas transport only a half or a part of work or power value can be applied since motion or about a half or a part of the energy of motion is absent as such. The existing means of measurement of electric energy - electrical energy meters - do not show the mechanical component of power $|P_{\sum}d.|$, in which the exceeding start-up part of electric energy was transitioned at the moment of blower acceleration by the rotor, but $|P_{\sum}d.|$ then is constantly present in the steady state mode of the operation of the electric motor with the blower in the gas transport method suggested. If the electrical energy meter cannot technically demonstrate the mechanical component of the developed power, it does not mean that it does not exist in the described technological and physical process. Moreover, it is constantly present, has an impact on the efficiency factor of the gas transport method suggested, according to the author's energy diagram. At the same time, the electrical energy meter measuring the power consumed by the electric motor and the load of the blower only measures Pe. = Ae./t, with all the losses equal to Ptot. = $(\sqrt{3})U \bullet I$, where U is the power supply voltage, I is the electric current in the wide-spread measurement systems. The electrical energy meter does not measure power $|P_{\sum}d.|$ from the kinetic energy of the motion of the rotor of the electric motor with the blower in the steady state mode, although the component is constantly present and provides the steady state mode, according to the author's diagram in Pic.

The mathematical expression of the efficiency factor of the electric motor in the gas transport method suggested agrees with the law of conservation of energy (5), the laws of mechanics (7), and the unit of measurement of the physical value of work (6). It also includes work from the kinetic energy of the motion of the system, while for the existing methods it is absent as such.

Absolute values of work or power of the rotational motion of the blower with the rotor in [1] and [2] are considered since they are negative in direction and have delayed character and decreasing motion due to friction and load in the case of the gas transport method suggested.

If there is a gas transport method where there is transformation of electric energy into mechanical energy, then the mechanical process must completely agree with the established laws of mechanics (7) and the law of conservation of energy (5) with the possibility of mathematical description. In the well-known (1), (2) gas transport methods and equipment for their performance the second component $|A_{\sum}d.|$ is absent and does not take part in performing work [1] and developing power [2], which contradicts the fundamental law of conservation of energy, laws of mechanics, and does not agree with the internationally established unit of measurement of such physical value as work (6) and cannot be applied in practice.

Detailed Description of the Embodiments. The suggested method of gas transport with the electric drive motor blower is performed as follows: mechanical energy is accumulated with the voltage supply to the electric windings in the start-up period. The energy, in its turn, is obtained when a part of electric energy is transformed when accelerating all rotating masses by the rotor. The accumulated mechanical energy is then applied in the steady state mode in the form of kinetic energy, which results in the sum of two components of total mechanical work or energy: Ae. - the work of electric current on rotating the rotor with the blower in the steady state mode, and $|A_{\sum}d.|$ - the work of accumulated mechanical energy transformed from electric energy when accelerating the rotation of the unified system of masses by the rotor. The value is applied together with Ae., while the total work is performed and defined by expression [1].

Brief description of the drawings.

The drawing shows the author's energy diagram which graphically demonstrates the method of gas transport. In Pic. the diagram has three vertical areas of work separated according to the types of energy: E - electric, EM - electromechanical, M - purely mechanical, or dynamic. On the left three periods of time or operating modes of the electric motor with the blower are showed, td. is the downtime after switching off the supply. Each period of time has a corresponding interval of work value on the right of the diagram, the start-up period has a corresponding acceleration and rotation of masses of the system by the rotor up to the steady state work value, from $|A_{\sum}d.|$. = 0 to $|A_{\sum}d.|$ = max while providing summarized balance of work [1] or balance of power [2]. At the same time there is an equivalent of transformation of the start-up part of electric energy into accumulated energy of rotating masses of the system in the form of equivalent conditional areas of triangles Sabc $\approx$ Sa'b'c' in the start-up period of time. Then, in the steady state mode top. work is equal to the total value Atot. = Ae. + $|A_{\sum}d.|$, and after the voltage supply is off td., work is determined within the interval from $|A_{\sum}d.|$ = max to $|A_{\sum}d.|$ = 0. The segments with arrows at the bottom of the diagram graphically show equation [1], [2] as the balance of energy or the sum of work and powers of the gas transport method suggested. In the center of the diagram from top to bottom a bidirectional arrow shows losses of the electric motor as well as the load during the gas transport method. These have an impact on each component

$$\mathrm{Ae.} \ \text{и} \ |A_{\sum}d.|$$

depending on the periods of time or operating modes. In the start-up period tst. the losses initially only depend on great starter current, while mechanical friction equals zero, but in the steady state top. mode the losses even and distribute evenly between electromechanical Ae. and purely dynamic work $|A_{\sum}d.|$ from kinetic energy of the motion of the rotor with the blower in the unified system. After the voltage supply to the motor is off, there only are mechanical losses with the load of, for example, gas transported, which decrease with the decrease of motion velocity. It is showed at the bottom of the diagram where the total balance [1] or [2] can also be observed. The dashed line in the middle from top to bottom limits and shows losses which, separately and in total, are presented by arrows where Acon.tot. = Acon.e. + Acon.$_\Sigma$d.. In the mechanical area of work on the diagram mathematical formula $|A_\Sigma d.| = (_\Sigma J) \cdot (\omega^2/2)$ is showed and it is obvious that this is the area of kinetic energy of the motion of the system motor-blower in the form of rotating masses, the work is constantly present after conversion from purely electrical energy from the area in period tst.. of the system's start-up while fully observing balance [1] or [2]. At the top of the energy diagram at the start of the start-up time tst. total work Atot. has an electric character and content and during the system's acceleration by the rotor it decreases and is converted into mechanical work from kinetic energy of the system's rotational motion and load moving towards the right hand mechanical side of the diagram with balance [1] or [2]. The diagram graphically presents the scale of the components of electromechanical and mechanical parts of work of the suggested gas transport method, which is two times greater than in the known methods.

The efficiency factor of the well-known gas transport methods from (1), (2) by means of existing electric motors is determined by the classical way (3), (4). The author's efficiency factor formula is different from the abovementioned since it involves work $|A_\Sigma d.|$ or $|P_\Sigma d.|$ power from kinetic energy of rotating masses, according to the law of conservation of energy (5).

The efficiency of the gas transport methods suggested results from the total summarized work performed by the electric motor with the blower according to [1] and the developed power [2] from the approximate author's diagram, which 1.5-2 times greater than the well-known ones. So, the increase in the efficiency factor of the gas transport method suggested is obvious. The ecological compatibility and agreement with the law of conservation of energy, laws of mechanics, and internationally established unit of measurement of such physical values as work and energy are beyond question.

According to source (5) for the invention proposed, which predates the claimed invention, pp. 67,68, "The law of conservation of mechanical energy", the main component of work $|A_\Sigma d.|$ accumulated in the period of acceleration of the system's masses by the rotor or power $|P_\Sigma d.|$ are essential and is applied together with the first component as a necessary feature according to [1] or [2]. This results in a straightforward conclusion, for example, in the well-known gas transport methods with the drive of the blower of the conditional electric motor STD-8000 where the start-up exceeding part of electric energy is accumulated when accelerating the system's masses by the rotor, then is stored and directly performs in the nominal steady state mode as the main energy component $|A_\Sigma d.|$. Since the moment of inertia of the electric motor's rotor is not much different from the total $(_\Sigma J)$ of the moments of inertia of the rotor, blower, (reduction gear) and connecting shafts taken together, then let us consider the example calculated for the motor's rotor.

Solution description predating the claimed invention drawing on the example of:

1. "Calculated starting characteristics" of STD-8000 synchronous electric motors for the drives of gas blowers.
2. The mass of the rotor of the electric motor STD-8000, m = 4520 kg and diameter of the active part of the rotor 600 mm (according to the technical passport).

As is seen from paragraph 1, great starter currents are necessary to start up the electric motor STD-8000 to accelerate the rotor with mass m = 4520 kg and moment of inertia $J = m \cdot r^2/2 = 4520$ kgx0,3$^2$/2 = 2034 kg/m$^2$. Therefore, the start-up mode of power supply is on; for the purpose two power transformers 25 MVA each are turned on in the parallel summing mode by means of section oil circuit breakers SMV-10. After the star-up mode of the main power unit is over, SMV-10 is turned off and the gas-compressor unit goes on working from one power transformers 25 MVA in the steady state mode consuming 1/3 of the power. In such a way, in the start-up mode period accumulation of kinetic energy of the rotor is provided up to the calculated value Ad = $(J \cdot \omega^2)/2$ with revolutions 3000 r/m or angular rate 314 s$^1$. After the star-up mode is over the obtained kinetic energy is used to transport gas along the pipes by means of the blower with the drive from the electric motor with the total energy balance determined by mathematical expressions [1] and [2], according to the law of conservation of energy from (5). The given examples of start-up modes of the electric motor with modes switching and then operating in the steady state mode fully coincide with the given description of the drawings in Pic. and the claim description.

Paragraph 2 gives calculated starting characteristics of STD-8000 as ratio of starter currents to nominal ones in the numerator, and ratio of starting torque to the nominal one in the motor shaft in the denominator. The maximum value of the starter current amounts up to sevenfold value (6,93 times). It is possible to calculate the total start-up part of electric energy using the author's formula Ae = $\sqrt{3} \cdot U \cdot I \cdot 6,93 \cdot tst/2$, (as the area of conditional triangles Sabc $\approx$ Sa'b'c' in Pic. in the start-up mode period during acceleration of the motor's rotor). The total start-up part of electric energy is transformed into kinetic energy of the rotor where it is accumulated and then applied in the steady state mode providing an equivalent transitional energy balance. Thus, the operational method of the motor with component $|A_\Sigma d.|$ and, by its means, the "Gas transport method" are only described here.

The value of kinetic energy of the rotor, applied in the steady state mode of the gas-compressing unit (estimating) is found by Ad = $(J \cdot \omega^2)/2 = (2034$ kg/m$^2 \cdot 314^2$s$^2$)/2 = 100272132 J, or adjusted for the shaft part of the rotor Ad = 89130784 J. If passport specifications of the power of STD-8000 kW or 8000000 W are compared the power of the developed kinetic energy of the rotor at 3000 r/m or angular rate 314 s$^1$, Pd = 89130784 W or work |A$_\sum$d.| = 89130784 J (W·s). At a first approximation Ae in the steady state mode amounts to not more than 10% (8,236% precisely), without taking into account various losses and load, of Atot. from expression [1]. According to the law of conservation of energy, the start-up part of electric energy of STD-8000 was transformed into accumulated mechanical energy of the rotor. Then the accumulated energy, according to the law of conservation of energy (5), is stored and applied in the energy balance of the total developed power of the blower in the method suggested. Therefore, the "industrial applicability" feature is provided by the passport specifications of STD-8000. The aforementioned examples of calculations show the ratio between the energy consumption for the acceleration of the rotor of the drive electric motor with the specified mass and the accumulation of a significant amount of energy. In the same way the mechanics of the technological process of gas transport with the blower's drive of the gas turbine engine takes place, at that about 90% of energy is lost in the form of heat and "pollutes" the Earth's atmosphere while the efficiency factor of the gas compressing unit is not over 10%.

From the sources available it follows that the invention suggested has not been known.

The proposed invention of the method of gas transport is novel, of a proper inventive level, non-obvious and industrially applicable.

Information Sources:

1. A.N. Kazachenko, "Exploitation of gas-compressor stations of main gas pipelines", Moscow, "Oil and Gas", 1999, 463p. ISBN №5-7246-0055-2.

2. Edited by A.N. Kazachenko; V.N. Nikitin, B.P. Korshakov, «Energy engineering of pipeline gas transport", Moscow, Published by Gubkin Russian State Oil and Gas University,2001.

3. GOST 25941 - 83, "Methods for determination of losses and electrical machine efficiency".

4. F.A. Brockhaus - I.A. Efron, "Encyclopedic dictionary", 1890, reprint on the occasion of the 100th anniversary of the 1st publishing of 1890-1990, "Terra" - TERRA, volume 80, 1994, p.469, "Electric motors".

5. B.M. Yavorsky and A.A.Dettlaff, "Guide to physics", for engineers and college students, 4th edition, revised and enlarged, "Nauka" Publishers, Chief editorial board of physical-mathematical literature, Moscow, 1968.

6. Y.I. Perelman, "Mechanics for Entertainment", Domodedovo, VAP Publishing, 1994.

7. 1. Newton, "Mathematical Principles of Natural Philosophy", translated from Latin with comments by A.N. Krylov, Leningrad, Academy of Sciences of USSR, 1936.

**Claims**

1. The gas transport method includes transporting gas through pipelines by a gas compressing unit with the drive of the electric motor where electric energy is transformed into mechanical one by means of interaction between the conductors or windings, after the voltage supply with the rotating motor's rotor, connecting shaft, with the reduction gear or without it, and the blower with specified masses and moments of their inertia connected mechanically, **characterizing in that** mechanical energy is accumulated along with the voltage supply to the windings in the start-up period, the energy, in its turn, is obtained when a part of electric energy is transformed when accelerating all rotating masses by the rotor, wherein the accumulated mechanical energy is then applied in the steady state mode in the form of kinetic energy, which results in the sum of two components of total mechanical work or energy: Ae. - the work of electric current on rotating the rotor with the blower in the steady state mode, and |A$_\sum$d.| - the work of accumulated mechanical energy transformed from electric energy when accelerating the rotation of the unified system of masses by the rotor, that is applied together with Ae., while the total work is performed and defined by expression:

$$\text{Atot.} = \text{Ae.} + |\text{Ad.}|; \qquad\qquad [1].$$

where Atot. is the total value of work of the electric motor with the blower on transformation of electric energy into mechanical one in the process of gas transporting.

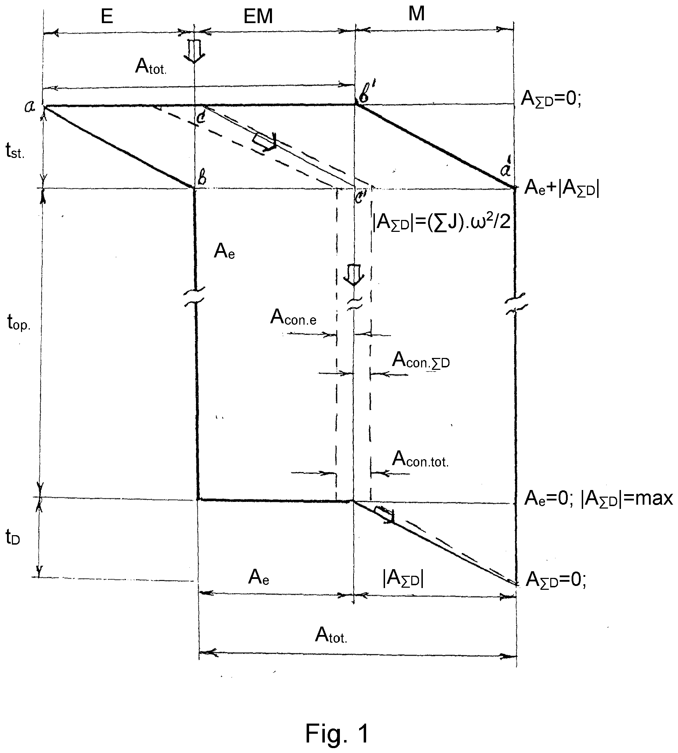

Fig. 1

<div style="text-align:center">**INTERNATIONAL SEARCH REPORT**</div>

| International application No. |
|---|
| PCT/RU 2017/000865 |

**A. CLASSIFICATION OF SUBJECT MATTER**

F17D1/065 (2006.01); H02K7/02 (2006.01)

According to International Patent Classification (IPC) or to both national classification and IPC

**B. FIELDS SEARCHED**

Minimum documentation searched (classification system followed by classification symbols)

F02B 37/12, F03G 3/08, F01D 19/00, F04D 13/06, 25/02, 25/06, F17D 1/00, 1/12, 1/14, 1/065, H02K7/02

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE

**C. DOCUMENTS CONSIDERED TO BE RELEVANT**

| Category* | Citation of document, with indication, where appropriate, of the relevant passages | Relevant to claim No. |
|---|---|---|
| X | Bobritsky N.V. et al. Osnovy neftyanoi i gazovoi promyshlennosti, Moskva, Nedra, 1988, p.102-105 | 1 |
| A | Yavorsky B.M et al. Spravochnik po fizike dlya inzhenerov i studentov vuzov, izdanie sedmoe, ispravlennoe, M.: Nauka, 1977, p. 36, 37, 68, 71, 129 | 1 |
| A | RU 2377439 C2 (KORNILOV VITALY DMITRIEVICH) 27.12.2009 | 1 |
| A | FR 2467989 A1 (DORNIER CLAUDIUS JP) 30.04.1981 | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 March 2018 (21.03.2018) | 22 March 2018 (22.03.2018) |
| Name and mailing address of the ISA/   RU | Authorized officer |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A.N. Kazachenko, "Exploitation of gas-compressor stations of main gas pipelines. *Oil and Gas,* 1999, ISBN 5-7246-0055-2, 463
- **V.N. NIKITIN ; B.P. KORSHAKOV.** Energy engineering of pipeline gas transport. Gubkin Russian State Oil and Gas University, 2001
- 1890, reprint on the occasion of the 100th anniversary of the 1st publishing of 1890-1990, "Terra" - TERRA. **F.A. BROCKHAUS ; I.A. EFRON.** Encyclopedic dictionary. 1994, vol. 80, 469
- **A.N. KAZACHENKO.** Exploitation of gas-compressor stations of main gas pipelines. *Oil and Gas,* 1999, ISBN 7246-0055-2, 463
- Energy engineering of pipeline gas transport. Gubkin Russian State Oil and Gas University, 2001
- Methods for determination of losses and electrical machine efficiency. *GOST 25941 - 83*
- Nauka" Publishers, Chief editorial board of physical-mathematical literature. **B.M. YAVORSKY ; A.A.DETTLAFF.** Guide to physics. 1968
- **Y.I. PERELMAN.** Mechanics for Entertainment. VAP Publishing, 1994
- **NEWTON.** Mathematical Principles of Natural Philosophy. Academy of Sciences of USSR, 1936